(19) Europäisches Patentamt

European Patent Office

Office européen des brevets

(11) Veröffentlichungsnummer: **0 034 781**
**B1**

# (12) EUROPÄISCHE PATENTSCHRIFT

(45) Veröffentlichungstag der Patentschrift:
01.02.84

(21) Anmeldenummer: 81101046.1

(22) Anmeldetag: 14.02.81

(51) Int. Cl.³: **B 32 B 15/08**, B 32 B 31/12

(54) Verfahren zur Herstellung von duktilen Verbundwerkstoffen.

(30) Priorität: 21.02.80 DE 3006447
27.12.80 DE 3049214

(43) Veröffentlichungstag der Anmeldung:
02.09.81 Patentblatt 81/35

(45) Bekanntmachung des Hinweises auf die Patenterteilung:
01.02.84 Patentblatt 84/5

(84) Benannte Vertragsstaaten:
AT BE CH DE FR GB IT LI

(56) Entgegenhaltungen:
CH - A - 221 675
DE - A - 1 779 556
DE - A - 1 944 662
DE - A - 2 614 660
FR - A - 1 312 676
US - A - 3 647 617

(73) Patentinhaber: BASF Aktiengesellschaft,
Carl-Bosch-Strasse 38, D-6700 Ludwigshafen (DE)

(72) Erfinder: Grimm, Gerhard, Am Horren 4, D-6701 Altrip
(DE)
Erfinder: Hagen, Karl, Dr.Ing., Duerkheimer Strasse 2,
D-6701 Friedelsheim (DE)
Erfinder: Kautz, Gerhard, Ing., Bergweg 2,
D-6719 Bissersheim (DE)
Erfinder: Scholl, Karl Heinz, Dr.Ing., Muehltorstrasse 4,
D-6715 Lambsheim (DE)
Erfinder: Sterzel, Hans-Josef, Dr.Chem., Wasgauring 3,
D-6701 Dannstadt (DE)

## Verfahren zur Herstellung von duktilen Verbundwerkstoffen

Die Erfindung betrifft ein Verfahren zur Herstellung eines sandwichartig aufgebauten Verbundwerkstoffes aus einem thermoplastischen Kunststoff als Innenschicht und Aluminiumfolien als Deckschichten, der insgesamt metallähnliche Festigkeitseigenschaften aufweist.

Verbundfolien aus einer Polyolefinträgerschicht und Metall-Deckschichten sind bekannt, ein Verfahren zu ihrer Herstellung durch Verbinden der Schichten mittels einer Haftvermittlerschicht ist beispielsweise in der DE-B-1 779 556 beschrieben. Die so hergestellten Verbundwerkstoffe haben jedoch den Nachteil, daß ihre mechanischen Eigenschaften primär bestimmt werden durch die Materialeigenschaften der mittleren Schicht aus thermoplastischem Kunststoff, das heißt, daß ein hoher Anteil der Festigkeitseigenschaften der metallischen Deckschichten des Verbundes ungenutzt bleiben.

Thermoplastische Kunststoffe haben ähnlich wie Metalle die Eigenschaft der Kaltverfestigung, d. h., ihre Festigkeit nimmt zu, wenn man sie kalt verformt. Die Kaltverformung ist ein in der Metallverarbeitung übliches Verfahren, bei dem der zu verformende Stoff bei Temperaturen unterhalb des Kristallitschmelzpunktes, also »kalt«, einer Druck- oder Zugbehandlung unterworfen wird. So nimmt z. B. bei einem 6,6-Polyamid-Halbzeug die Zugfestigkeit um ein Mehrfaches seiner Ausgangsfestigkeit zu, wenn es durch Kaltwalzen einer Querschnittreduktion unterworfen wurde. Gleichzeitig geht hierbei die Bruchdehnung erheblich zurück, so daß der thermoplastische Kunststoff duktile Eigenschaften erhält, die denen ausgesuchter metallischer Werkstoffe entsprechen.

Solche kaltverfestigten thermoplastischen Kunststoffe zeigen nach der Umformung Relaxationseffekte, d. h., daraus hergestellte Formkörper, z. B. Folien, neigen im Laufe der Zeit und insbesondere bei thermischen Einflüssen zur Rückdeformation.

In der US-A-3 647 617 ist ein Verfahren zur Herstellung von dünnen Verpackungsfolien einer Dicke von vorzugsweise weniger als 0,076 mm beschrieben, bei dem Aluminiumfolien mit Hilfe einer Haftvermittlerschicht aus einem Ethylen-Acrylsäure-Copolymerisat verbunden werden und der Verbund anschließend unter Dickereduktion kalt gewalzt wird.

Die DE-A-2 614 660 betrifft tiefgezogene Verpackungsbehälter aus einem Metall-Kunststoff-Verbundmaterial. Die Kunststoff-Komponente ist dabei eine Folie mit einer Dicke von 0,012 bis 0,02 mm, die biaxial orientiert ist. Biaxiales Orientieren von dünnen Kunststoff-Folien durch Verstrecken und Kaltverformen von wesentlich dickeren Kunststoff-Schichten sind unterschiedliche Verfahrenstechniken.

Der Erfindung lag die Aufgabe zugrunde, ein Verfahren zur Herstellung eines duktilen Verbundwerkstoffes zu entwickeln, der in seinen mechanischen Eigenschaften dem Aluminium entspricht, während die sonstigen physikalischen Eigenschaften von der Kunststoff-Innenschicht bestimmt werden.

Diese Aufgabe wird gelöst, wenn man bei der Herstellung von Verbundwerkstoffen aus einem thermoplastischen Kunststoff als Innenschicht und Aluminiumfolien als Deckschichten, einen kaltverformten thermoplastischen Kunststoff als Innenschicht einsetzt.

Gegenstand der Erfindung ist demzufolge ein Verfahren zur Herstellung von Verbundwerkstoffen aus einem thermoplastischen Kunststoff einer Dicke von 0,5 bis 15 mm als Innenschicht und Aluminiumfolien einer Dicke von 0,1 bis 5 mm als Deckschichten sowie gegebenenfalls Haftvermittlerfolien, durch Zusammenführen der Schichten und 5 bis 60 sec lang dauerndes Verpressen des Verbundes bei Temperaturen oberhalb der Erweichungstemperatur des Kunststoffes bzw. des Haftvermittlers bei einem Druck von 20 bis 200 bar, wobei als Innenschicht ein durch Walzen kaltverformter thermoplastischer Kunststoff eingesetzt wird.

Als thermoplastische Kunststoffe für die Innenschicht kommen insbesondere teil- bis hochkristalline Kunststoffe in Frage, wie Polyolefine, z. B. Hoch- und Niederdruck-Polyethylen oder Polypropylen, Polyamide, z. B. Polyamid-6, Polyamid-6,6 oder Polyamid-12, ferner Polyethersulfone und Polycarbonate in Frage. Besonders bevorzugt sind Polyamid-6 oder Polyamid-6,6, die mit 5 bis 40 Gew.-% Aluminium-Nadeln oder -Grieß gefüllt sind. Ferner kann man von amorphen Kunststoffen ausgehen, die erst beim Kaltverformen unter Verfestigung kristallisieren. Beispiele für solche Kunststoffe sind Copolyamide und Copolyester, deren Kristallisationsgeschwindigkeit durch Einbau von Comonomeren verlangsamt wurde. Auch Thermoplaste mit von sich aus geringer Kristallisationsgeschwindigkeit, wie z. B. isotaktisches Polystyrol, sind geeignet. Besonders bevorzugt ist Polyethylenterephthalat mit relativen Viskositäten von 1,25 bis 1,65 (gemessen an einer 0,5%igen Lösung in einem Gemisch aus Phenol und o-Dichlorbenzol im Gewichtsverhältnis 3 : 2 bei 25° C).

Die Dicke der Innenschicht kann zwischen 0,5 und 15 mm, insbesondere zwischen 1 und 10 mm, schwanken. Die Deckschichten bestehen aus Aluminiumfolien, die eine Dicke von 0,1 bis 5 mm aufweisen.

In manchen Fällen kann es notwendig sein, den Verbund von Innen- und Deckschichten durch Schmelzkleber, oder Haftvermittlerfolien herzustellen. Dafür sind übliche Kunststoffe, wie Ethylen/Acrylsäure-, Ethylen/Vinylacetat- oder hydrierte Butadien/Styrol-Copolymerisate geeignet.

Erfindungsgemäß werden kaltverformte thermoplastische Kunststoffe verwendet. Das Kaltverformen der Kunststoffschicht kann auf übliche Weise vorgenommen werden, z. B. durch Walzen bei Temperaturen unterhalb des Kristallitschmelzpunktes, vorzugsweise bei Raumtemperatur, wobei eine Dickereduktion um 10 bis 80%, vorzugsweise zwischen 30 und 70%, erreicht wird. Bei Polyethylenterephthalat verformt man bevorzugt im Bereich der Glaserweichungstemperatur, d. h., bei etwa 70 bis 110°C.

Bei der Herstellung der Verbundwerkstoffe wird die Innenschicht mit den Deckschichten sowie gegebenenfalls den Haftvermittlerfolien zusammengeführt und der Verbund bei Temperaturen oberhalb der Erweichungstemperatur des Kunststoffes bzw. (bei Verwendung von Haftvermittlern) des Haftvermittlers bei einem Druck von 20 bis 200, vorzugsweise 50 bis 100 bar 5 bis 60, vorzugsweise 15 bis 40 sec lang verpreßt wird.

Die Kunststoff-Folie kann von einem Coil abgezogen werden und der Verbund aufgrund seiner duktilen Eigenschaften ebenfalls wieder auf ein Coil gewickelt werden. Das Verpressen kann auf üblichen Maschinen, z. B. auf beheizbaren Plattenbandpressen, vorgenommen werden.

Die erfindungsgemäßen Verbundwerkstoffe können zur Herstellung von Tiefziehteilen und Fließpreßteilen, wie Kannen, Flaschen, Dosen, Becher und Hülsen, z. B. von Kondensatorhülsen oder von Patronenhülsen für Jagd- oder Übungsmunition, verwendet werden.

Beispiel 1

Eine 4 mm dicke Folie aus Polyamid-6,6 wurde mit 50% Querschnittsreduktion kaltgewalzt. Auf einer Plattenbandpresse wurde sie mit 0,3 mm dicken, auf 235°C vorgewärmten Aluminiumfolien bei einem Druck von 50 bis 100 bar 30 sec lang verpreßt. Es wurde ein gut haftender Verbund erhalten.

Zum Vergleich wurde auf die gleiche Weise ein Verbundwerkstoff mit nicht kaltgewalztem Polyamid hergestellt.

An den Verbundwerkstoffen und an den Ausgangsmaterialien wurden die Zugfestigkeit und die Bruchdehnung nach DIN 53 455 gemessen.

Ergebnis siehe Tabelle:

| | Zugfestigkeit [N. mm$^{-2}$] | Bruchdehnung % |
|---|---|---|
| Polyamidfolie (nicht kaltgewalzt) | 50 | 200 |
| Polyamidfolie (kaltgewalzt) | 75 | 22 |
| Aluminiumfolie | 185 | 2 |
| Verbund (nichtgewalztes PA) | 58 | 18 |
| Verbund (kaltgewalztes PA) | 130 | 5 |

Beispiel 2

Durch Breitschlitzextrusion bei einer Kunststofftemperatur von 275°C wurde eine 4 mm dicke, amorphe Polyethylenterephthalat-Folie mit einer relativen Viskosität von 1,47 hergestellt. Sie wurde auf einer auf 15°C temperierten Chill-Roll-Walze abgezogen und zusätzlich durch Anblasen mit Luft abgekühlt.

Diese Folie wurde auf einem Walzenstuhl, dessen Walzen auf 90°C geheizt wurden, unter Dickereduktion auf 1 mm gewalzt, wobei die kristallinen Anteile von 0 auf 33% anstiegen. Auf einer Plattenbandpresse wurde sie mit 0,2 mm dicken, auf 235°C vorgewärmten Aluminiumfolien bei einem Druck von 50 bis 100 bar 30 sec lang verpreßt. Es wurde ein gut haftender Verbund erhalten.

Zum Vergleich wurde auf die gleiche Weise ein Verbundwerkstoff mit nicht kaltgewalztem Polyethylenterephthalat hergestellt.

## Ergebnisse:

| | Zugfestigkeit N. mm$^{-2}$ | E-Modul N. mm$^{-2}$ | Bruchdehnung % |
|---|---|---|---|
| amorphe PET-Folie | 47 | 2 200 | 280 |
| gewalzte PET-Folie | 105 | 8 050 | 20 |
| Aluminiumfolie | 185 | 70 600 | 2 |
| Verbund (nichtgewalztes PET) | 60 | 8 400 | 24 |
| Verbund (gewalztes PET) | 129 | 24 200 | 4 |

**Patentansprüche**

1. Verfahren zur Herstellung von Verbundwerkstoffen aus einem thermoplastischen Kunststoff einer Dicke von 0,5 bis 15 mm als Innenschicht und Aluminiumfolien einer Dicke von 0,1 bis 5 mm als Deckschichten, sowie gegebenenfalls Haftvermittlerfolien, durch Zusammenführen der Schichten und 5 bis 60 sec lang dauerndes Verpressen des Verbundes bei Temperaturen oberhalb der Erweichungstemperatur des Kunststoffes bzw. des Haftvermittlers bei einem Druck von 20 bis 200 bar, dadurch gekennzeichnet, daß ein durch Walzen kaltverformter thermoplastischer Kunststoff eingesetzt wird.

2. Verfahren nach Anspruch 1, dadurch gekennzeichnet, daß als thermoplastischer Kunststoff ein Polyolefin oder ein Polyamid verwendet wird.

3. Verfahren nach Anspruch 1, dadurch gekennzeichnet, daß als thermoplastischer Kunststoff Polyethylenterephthalat verwendet wird.

4. Verfahren nach Anspruch 1, dadurch gekennzeichnet, daß als thermoplastischer Kunststoff ein mit Aluminium-Nadeln oder -Grieß gefülltes Polyamid-6 oder Polyamid-6,6 verwendet wird.

**Claims**

1. A process for the production of a laminate consisting of a thermoplastic material having a thickness of from 0.5 to 15 mm as inner layer, and aluminium foils having a thickness of from 0.1 to 5 mm as cover layers with or without adhesion-promoting films, by bringing the layers together and pressing the composite structure for from 5 to 60 seconds at a temperature above the softening temperature of the plastics material or adhesion-promoting films if present, under a pressure of from 20 to 200 bars, wherein a thermoplastic material cold-worked by rolling is employed.

2 A process as claimed in claim 1, wherein a polyolefin or a polyamide is used as thermoplastic material.

3. A process as claimed in claim 1, wherein polyethylene terephthalate is used as thermoplastic material.

4. A process as claimed in claim 1, wherein a polyamide-6 or polyamide-6,6 filled with aluminium needles or granules is used as thermoplastic material.

**Revendications**

1. Procédé de fabrication de stratifiés composites ductiles avec une matière thermoplastique d'une épaisseur de 0,5 à 15 mm comme couche interne et des feuils d'aluminium d'une épaisseur de 0,1 à 5 mm comme couches extérieures, ainsi qu'éventuellement des pellicules d'adhérence, par superposition des couches et compression de la structure composite pendant 5 à 60 secondes, à des températures supérieures à la température de ramollissement de la matière plastique ou de l'agent d'adhérence, sous une pression de 20 à 200 bars, caractérisé en ce que la matière plastique est une matière thermoplastique façonnée par un laminage à froid.

2. Procédé suivant la revendication 1, caractérisé en ce que la matière thermoplastique est une polyoléfine ou un polyamide.

3. Procédé suivant la revendication 1, caractérisé en ce que la matière thermoplastique est du poly(téréphtalate d'éthylène).

4. Procédé suivant la revendication 1, caractérisé en ce que la matière thermoplastique est un polyamide 6 ou un polyamide 6,6 chargé d'aluminium aciculaire ou pulvérulent.

4